# EUROPÄISCHE PATENTANMELDUNG

(11) **EP 2 068 425 A1**
(43) Veröffentlichungstag der Anmeldung: **10.06.2009**
(21) Anmeldenummer: 07122419.0
(22) Anmeldetag: 05.12.2007
(51) Int. Cl.: H02K 1/27, H02K 1/28, H02K 21/14

(54) **Rotor für eine elektrische Synchronmaschine**

(71) Anmelder: E+a Forschungsinstitut Elektromaschinen GmbH, 4313 Möhlin (CH)
(72) Erfinder: Tresch, Roger, 4313, Möhlin (CH)
(74) Vertreter: Vossius & Partner

(57) **Zusammenfassung**

Die Erfindung betrifft einen Rotor für eine elektrische Synchronmaschine, bei dem außenseitig zumindest ein magnetischer Materialbereich 10 ausgebildet ist, der von einer Bandage 11 umgehen ist, wobei der magnetische Materialbereich 10 eine unrunde Außenkontur aufweist.

## Beschreibung

Die Erfindung betrifft einen Rotor für eine elektrische Synchronmaschine, insbesondere eine permanentmagneterregte Synchronmaschine.

Es ist bekannt, Rotoren für elektrische Synchronmaschinen in Form einer Hülse auszubilden, die auf der Außenmantelfläche Permanentmagnete trägt. Diese Magnete werden durch eine Hülse beziehungsweise Bandage gehalten. Die Bandage wird beispielsweise auf die Magneten aufgepresst, so dass sie unter Vorspannung auf den Magneten sitzt, damit auch in Betrieb eine eventuell entstehende Spalte vermieden wird.

Um gerade bei hohen Drehzahlen temperaturbedingte Ausdehnungen und Spaltbildungen durch ein Abheben der Magnete durch Radialkräfte zu verhindern, ist auch vorgeschlagen worden, den Innenmantel des Rotors konisch auszubilden. Dies bewirkt, dass beim Aufpressen des Rotors auf die Welle diese von innen her Vorspannung erzeugt. Dies ist beispielsweise in der EP-A- 0 631 364 gezeigt.

Der Erfindung liegt die Aufgabe zugrunde, einen Rotor für eine Synchronmaschine bereitzustellen, der die Ablösung der Magnete bei hohen Drehzahlen verhindert und dadurch die Funktionsfähigkeit bei hohen Drehzahlen weiter verbessert.

Diese Aufgabe wird durch die Patentansprüche gelöst.

Die Erfindung geht von dem Grundgedanken aus, bei einem Rotor für eine elektrische Synchronmaschine, bei dem außenseitig zumindest ein magnetischer Materialbereich ausgebildet ist, der von einer Bandage umgeben ist, dem magnetischen Materialbereich eine unrunde Außenkontur zu verleihen. Wie im Folgenden näher erläutert wird, ist eine derartige Ausgestaltung mit Vorteilen hinsichtlich der mechanischen Festigkeit verbunden, als auch mit einem besseren (mehr sinusförmigen) Flussverlauf.

Durch die unrunde beziehungsweise nicht konzentrische Außenkontur des magnetischen Materialbereichs liegen am Spalt zwischen den einzelnen Polen des magnetischen Materialbereichs, also in den Pollücken, keine Knicke in der Außenkante vor. Gemäß einer bevorzugten Ausführungsform der Erfindung liegt in diesen Bereichen ein tangentialer Übergang vor.

Vorzugsweise besteht die Außenkontur des magnetischen Materialbereichs aus mehreren Kreissegmenten, deren Kreismittelpunkt bezüglich der Rotorachse beziehungsweise des "Mittelpunkts" des Rotors versetzt ist. Vorzugsweise entspricht dieser Versatz der Dicke des magnetischen Materialbereichs. Es ist auch bevorzugt, dass die mehreren Kreissegmente den gleichen Radius aufweisen. Dies bedeutet, dass die Kreismittelpunkte der einzelnen Kreissegmente auf einem Kreis um die Rotorachse liegen, dessen Radius gleich der Dicke des magnetischen Materialbereichs ist.

Die den magnetischen Materialbereich umgebende Bandage weist vorzugsweise eine entsprechend unrunde Innenkontur auf. Die Bandage ist vorzugsweise aus einem faserverstärkten Kunststoff ausgebildet. In diesem Fall kann die Bandage bereits mit der entsprechend Unrunden beziehungsweise nicht konzentrischen Innenkontur angefertigt und auf den magnetischen Materialbereich aufgebracht werden. Alternativ dazu kann die Bandage aus Metall ausgebildet sein. Eine derartige Metallhülse passt sich im aufgepressten Zustand an die unrunde Außenkontur des magnetischen Materialbereichs an.

Unabhängig vom verwendeten Material wird die Bandage vorzugsweise auf den magnetischen

Materialbereich aufgepresst, um dadurch eine entsprechende Vorspannung zu erzielen. Alternativ dazu wird die Bandage ohne Vorspannung auf den magnetischen Materialbereich aufgebracht, also mit entsprechendem Spiel aufgebracht, und dann mit beispielsweise Gießharz vergossen, un die vorhanden Spalte zu verfüllen.

Bei dem erfindungsgemäßen Rotor ist ferner vorzugsweise zwischen der Außenfläche des hülsenförmigen Rotors und der Innenfläche des magnetischen Materialbereichs eine Kupferlage vorgesehen. Dies ist von Vorteil, da es bei der entsprechenden Vorspannung beziehungsweise aufgrund der radial wirkenden Kräfte aufgrund der Weichheit des Materials und der damit einhergehenden leichten Verformbarkeit als Pufferelement wirkt. Dies ist besonders bei Kohlefaser-Bandagen von Vorteil. Bei Kohlefäser-Bandagen steigt die Vorspannung im Betrieb an, da sich das Metall aufgrund der Temperaturferwärmung und der radialen Kräfte dehnt, die Kohlefaser-Bandage aufgrund des negativen Temperaturkoeffizienten und des niedrigen E-Moduls jedoch schrumpft. Derartige gegenläufige Bewegungen beziehungsweise Ausdehnungen werden durch die Kupferschicht gedämpft beziehungsweise abgefedert. Damit geht eine wesentlich verbesserte mechanische Festigkeit einher.

Vorzugsweise weist der erfindungsgemäße Rotor eine konisch ausgebildete Rotorbohrung auf, um beim Aufpressen des Rotors auf die Welle von innen her eine Vorspannung zu erzeugen. Eine derartige konische Rotorbohrung ist darüber hinaus von Vorteil, da über das Maß des Aufschiebens des Rotors auf die Welle das Maß der Vorspannung bestimmt beziehungsweise eingestellt werden kann.

Vorzugsweise erfolgt das Aufschieben des Rotors auf die Welle mit hydraulischer Unterstützung, so dass ein geringer Ölfilm zwischen der Welle und dem Konus des Rotors vorhanden ist.

Die Erfindung wird nun unter Verweis auf die beigefügten Zeichnungen näher erläutert. Es zeigen:
- Fig. 1: eine Längsquerschnittsdarstellung des erfindungsgemäßen Rotors;
- Fig. 2: eine Schnittdarstellung durch den erfindungsgemäßen Rotor entlang der Linie B-B; und
- Fig. 3: eine vergrößerte Detailansicht der Querschnittsdarstellung von Fig. 2.

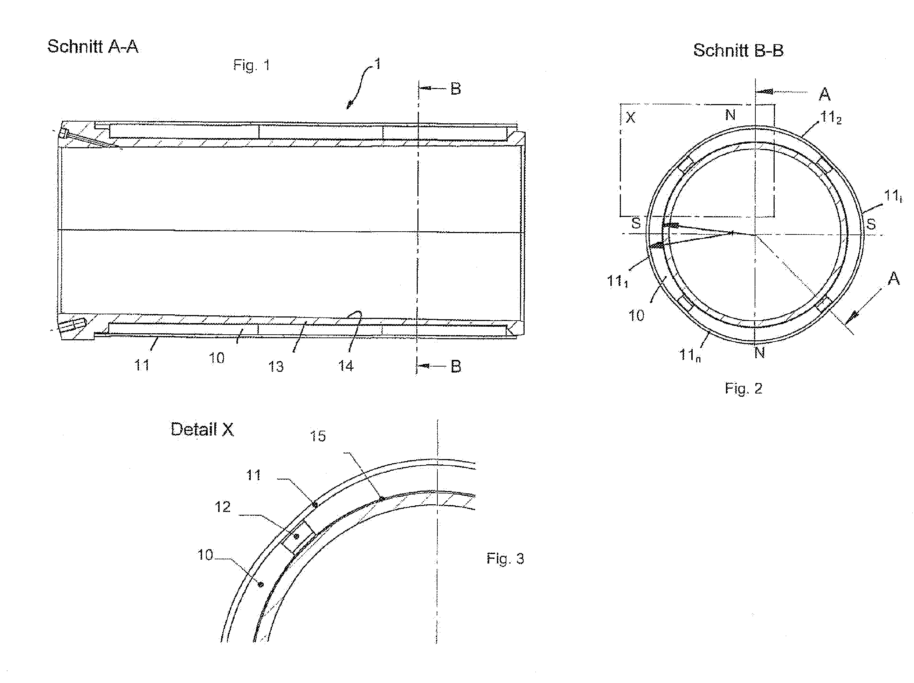

Fig. 1 zeigt den erfindungsgemäßen Rotor 1 in Querschnittsdarstellung A-A. Auf der Außenmantelfläche der Rotorhülse 13 ist der magnetische Materialbereich 10 ausgebildet. Auf den magnetischen Materialbereich 10 (beispielsweise Permanentmagnete) ist eine Bandage 11 aufgepresst, die die Magnete umgibt. In Fig. ist auch deutlich die konische Innenfläche 14 der Rotorhülse 13 zu erkennen.

Die Schnittdarstellung B-B von Fig. 2 zeigt die sich abwechselnden Magnetpole, die auf den Rotor 1 aufgebracht sind. Sowohl in Fig. 2 als auch in Fig. 3 ist die unrunde Außenkontur des magnetischen Materialbereichs 10 zu erkennen. Auch die aufgebrachte Bandage 11 weist diese unrunde Kontur auf. Die einzelnen Segmente 11₁, 11₂, ..., 11₁, ..., 11ₙ bzw. die Außenfläche des magnetischen Materialbereichs weisen einen Radius auf, dessen Mittelpunkt exzentrisch zur Rotorachse liegt. Zur Verdeutlichung sind in Fig. 2 zum einen der Radius der Außenkontur der Rotorhülse 13 als auch beispielhaft ein Radius für das Segment 11₁ eingezeichnet. Der Radius beziehungsweise die Radien der Kreissegmente sind dabei so gewählt, dass in den jeweiligen Pollücken ein tangentialer Übergang von einem Segment zum nächsten vorliegt. Dies ist am Beispiel der Pollücke 12 in Fig. 3 gut zu erkennen.

Ferner ist in Fig. 3 das optionale Kupferblech 15 gezeigt, das zwischen der Rotorhülsenaußenfläche und der Innenfläche des magnetischen Materialbereichs vorgesehen sein kann. Alternativ dazu oder auch zusätzlich könnte auch zwischen der Außenfläche des magnetischen Materialbereichs und der Bandage ein Kupferblech vorgesehen sein (nicht in Fig. 3 gezeigt).

## Patentansprüche

1. Rotor für eine elektrische Synchronmaschine, bei dem außenseitig zumindest ein magnetischer Materialbereich (10) ausgebildet ist, der von einer Bandage (11) umgeben ist, **dadurch gekennzeichnet, das** der magnetische Materialbereich (10) eine unrunde Außenkontur aufweist.

2. Rotor nach Anspruch 1, wobei die Außenkontur aus mehreren Kreissegmenten (11₁, 11₂, ..., 11ₙ) besteht, deren Kreismittelpunkt bezüglich der Rotorachse versetzt ist.

3. Rotor nach Anspruch 2, wobei die mehreren Kreissegmente den gleichen Radius aufweisen.

4. Rotor nach Anspruch 2 oder 3, wobei der Versatz des Kreismittelpunktes von der Rotorachse der radialen Dicke des magnetischen Materialbereichs entspricht.

5. Rotor nach einem der Ansprüche 1 bis 4, wobei die unrunde Außenkontur derart ausgebildet ist, dass im Bereich der Pollücken (12) des magnetische Materialbereichs (10) ein tangentialer Übergang vorliegt.

6. Rotor nach einem der Ansprüche 1 bis 5, wobei die Bandage (11) eine der Unrunden Außenkontur des magnetischen Materialbereichs (10) entsprechende unrunde Innenkontur aufweist.

7. Rotor nach einem der Ansprüche 1 bis 6, wobei die Bandage (11) aus faserverstärktem Kunststoff ausgebildet ist.

8. Rotor nach einem der Ansprüche 1 bis 6, wobei die Bandage (11) aus Metal ausgebildet ist.

9. Rotor nach einem der Ansprüche 1 bis 8, wobei die Bandage (11) auf den magnetischen Materialbereich (10) aufgepresst ist.

10. Rotor nach einem der Ansprüche 1 bis 8, wobei die Bandage (11) ohne Vorspannung auf den magnetischen Materialbereich (10) aufgebracht und mit diesem Vergossen ist.

11. Rotor nach Anspruch 10, wobei die Bandage (11) mit wärmeleitfähigem Gießharz vergossen ist.

12. Rotor nach einem der Ansprüche 1 bis 11, wobei der Rotor (1) hülsenförmig ausgebildet ist.

13. Rotor nach Anspruch 12, wobei ferner zwischen Hülsenaußenfläche und Innenfläche des magnetischen Materialbereichs zumindest teilweise eine Kupferlage (15) vorgesehen ist.

14. Rotor nach einem der Ansprüche 1 bis 13, wobei die Rotorbohrung (14) konisch ausgebildet ist.

15. Rotor nach einem der Ansprüche 1 bis 14, wobei der magnetische Materialbereich aus Permanentmagneten gebildet ist.
